# EUROPEAN PATENT APPLICATION

(11) **EP 1 809 011 A1**
(43) Date of publication of application: **18.07.2007**
(21) Application number: 05805506.2
(22) Date of filing: 02.11.2005
(51) Int. Cl.: H04M 3/56, H04M 11/00, H04Q 7/38

(54) **COMMUNICATION PROGRAM AND COMMUNICATION TERMINAL**

(30) Priority: 04.11.2004 JP 2004320586
(71) Applicant: MATSUSHITA ELECTRIC INDUSTRIAL CO., LTD., Osaka 571-8501 (JP)
(72) Inventor: MATSUI, Takefumi Matsushita Electric Industrial Co.Ltd, Osaka 540-6319 (JP); KANAYA, Etsumi Matsushita Electric Industrial Co.Ltd, Osaka 540-6319 (JP)
(74) Representative: Grünecker, Kinkeldey, Stockmair & Schwanhäusser Anwaltssozietät
(86) International application number: PCT/JP2005/020212
(87) International publication number: WO 2006/049209

(57) **Abstract**

The present invention aims at extending a talkable time allocated by a server at the user's will of the equipment. In a PoC service that implements a half duplex talk session using a packet communication among a plurality of equipments via a PoC server, the PoC server receives a talking time extend request from a user equipment 21 to which a floor is granted (step S801). Then, the PoC server grants the talking time extend request by determining that no floor take request is made by equipments except the user equipment 21 to which the floor is granted. Then, the PoC server transmits a talking time extend notification to the equipment to which the talking time extend request is granted (step S802).

## Description

### Technical Field

The present invention relates to a communication program and a communication equipment used in a PoC (Push-to-Talk over Cellular) service.

### Background Art

The PoC (Push-to-Talk over Cellular) service is a service that implements a half duplex talk session using a packet communication among a plurality of communications equipments via the server. In the PoC service, the server relays communications among a plurality of communications equipments. Since only one-way talking can be done in the half duplex talk session such as PoC, or the like, each user takes the floor before the talk session is initiated. In the PoC service, a talkable time is different every user after the user takes the floor, and the server decides and manages respective values.

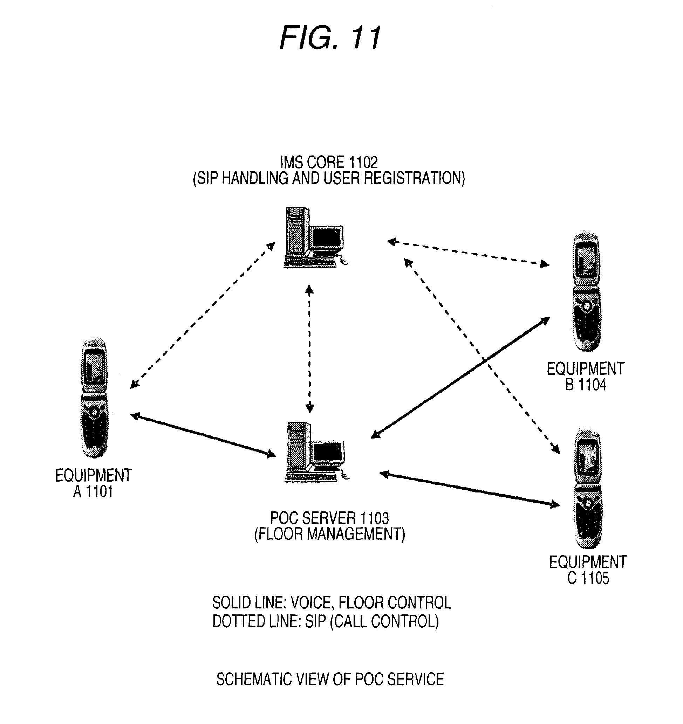

FIG.11 shows a schematic view of the PoC service. A user equipment A 1101, a user equipment B 1104, and a user equipment C 1105 hold communication with each other via a IMS (IP Multimedia Subsystem) Core 1102 that handles call control (SIP; Session Initiation Protocol) and user registration and a PoC server 1103 that manages Floors. In FIG.11, a solid line represents voice and Floor Control (floor control), and a dotted line represents SIP (call control).

Since the PoC service performs the half duplex talk session, the user can transmit voice data only while such user is pressing the talking button after the connection with the other end of the line is established, nevertheless the user cannot receive voice data while such user is pressing the talking button. Therefore, in order to hold a conversation with the other person, the users must exchange short messages mutually while pressing/releasing the talking button. Also, the PoC service can provide not only the one-to-one connection but also simultaneous connections between a plurality of equipments in a certain group. In this case, voice data from the equipment at which the user is pressing the talking button are transmitted to all remaining equipments (see Non-Patent Literature 1, for example).

Non-Patent Literature 1: "PoC Release 1.0 [3]", [online], p.19-21, [2004, August 6 searched], Internet (URL:http:// www.ericsson.com/mobilityworld/sub/open/technologies/ims poc/docs/poc rele ase_1_0_spec)

### Disclosure of the Invention

### Problems that the Invention is to Solve

In such PoC service in the prior art, there existed such circumstances that, even though the user would like to extend a talking time during the talk session, such user can continue the talk session only for a talking time allocated by the PoC server 1103.

The present invention has been made in view of the above circumstances in the prior art, and it is an object of the present invention to provide a communication program and a communication equipment capable of extending a user's talking time allocated by a server at the user's will of the equipment in a PoC service.

### Means for Solving the Problems

A communication program of the present invention for controlling a relay of communication among a plurality of equipments in a PoC service that implements a half duplex talk session using a packet communication among the plurality of equipments, and for causing a computer to function as a receiving unit for receiving a talking time extend request from the equipment to which a floor is granted; an granting unit for allowing the talking time extend request by determining that no floor take request is made by equipments except the equipment to which the floor is granted; and a transmitting unit for transmitting a talking time extend notification to a equipment to which the talking time extend request is allowed.

According to the above configuration, the user's talking time allocated by the server can be extended at the user's will of the equipment by requesting an extension of the talking time from the equipment in the PoC service. Therefore, user's convenience in the PoC service can be improved.

Also, the communication program of the present invention for further causing a computer to function as a notifying unit for notifying a notice that the talking time extend request is allowed to the equipment. According to the above configuration, since the equipment is notified the notice that the talking time extend request is allowed, the user of the equipment can grasp the extended talking time.

Also, a communication equipment of the present invention for conducting a half duplex talk session using a packet communication with another equipment via a server into which the communication program of the present invention is installed, includes a transmitting unit for transmitting the talking time extend request to the server while the floor is granted to the communication equipment.

According to the above configuration, the user's talking time allocated by the server can be extended at the user's will of the equipment by requesting an extension of the talking time from the equipment in the PoC service. Therefore, user's convenience in the PoC service can be improved.

### Advantages of the Invention

According to the present invention, the user's talking time allocated by the server can be extended at the user's will of the equipment by requesting an extension of the talking time from the equipment in the PoC service. Therefore, user's convenience in the PoC service can be improved.

### Brief Description of the Drawings

[FIG.1] An internal configurative view of a user equipment in a PoC service to explain a first embodiment of the present invention.
[FIG.2] A diagram showing an outline of sequences followed when a PoC server 22 notifies a user equipment 21 to which a floor is granted of a talkable time, in the PoC service of the present embodiment.
[FIG.3] A diagram showing sequences that a user equipment 31 requests the floor, the floor is granted to the user equipment by a PoC server 32 and the user equipment initiates the talk session, in the PoC service of the present embodiment.
[FIG.4] A diagram showing sequences applied when the user equipment 31 releases the floor while talking, in the PoC service of the present embodiment.
[FIG.5] A diagram showing sequences applied when the user equipment 31 is notified from the PoC server 32 of the revocation of the floor while talking and releases the floor, in the PoC service of the present embodiment.
[FIG.6] A diagram showing an outline of sequences applied when the PoC server notifies the user equipment of a talkable time in SIP/SDP negotiations before a talk session is initiated, in a PoC service of a second embodiment of the present invention.
[FIG.7] A diagram showing sequences applied when the user equipment 21 negotiates with the PoC server 22 via an IMS core 71, in the PoC service of the present embodiment.
[FIG.8] A diagram showing an outline of sequences applied when the user equipment transmits a talking time extend request to the PoC service while talking to extend a talking time, in a PoC service of a third embodiment of the present invention.
[FIG.9] A diagram showing sequences applied when the user equipment 31 having the floor transmits a talking time extend request to the PoC server 32, in the PoC service of the present embodiment.
[FIG.10] A view showing a flowchart applied when the PoC server 32 that accepts the extend request determines whether or not the extension request should be allowed.
[FIG. 11] A schematic view of the PoC service.

### Description of Reference Numerals and Signs

- 11: microphone
- 12: speaker
- 13: input portion
- 14: display portion
- 15: timer
- 16: Floor control portion
- 16a, 21a: transmitting unit
- 16b: receiving unit
- 16c: notifying unit
- 17: talking button
- 18: communication control portion
- 19: SIP control portion
- 19a: first communicating unit
- 19b: second communicating unit
- 19c: notifying unit
- 21: user equipment
- 22, 32, 1103: PoC server
- 22a, 22g: receiving unit
- 22b, 22h: granting unit
- 22c: allocating unit
- 22d, 22i: transmitting unit
- 22e: first communicating unit
- 22f: second communicating unit
- 22j: notifying unit
- 31: user equipment #1
- 33: user equipment #2
- 71, 1102: IMS Core
- 1101: user equipment A
- 1104: user equipment B
- 1105: user equipment C

### Best Mode for Carrying Out the Invention

A PoC service for implementing a half duplex talk session using a packet communication among a plurality of communications equipments via a PoC server will be explained hereinafter. The half duplex talk session is the two-way communication system through which a voice can be transmitted only in one way at every moment.

### (First Embodiment)

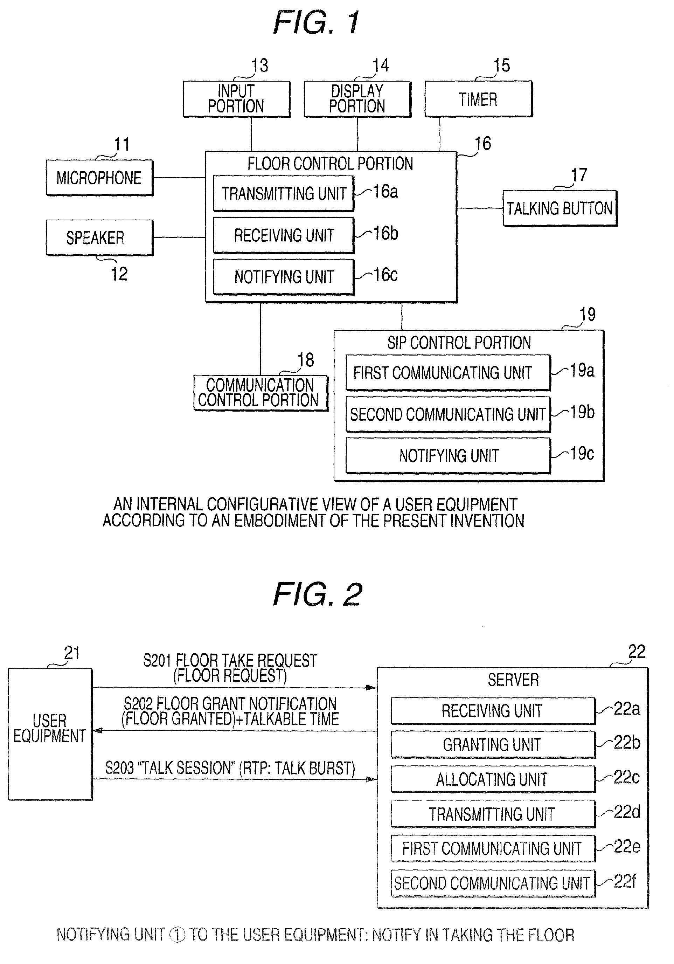

FIG.1 is an internal configurative view of a user equipment in the PoC service to explain a first embodiment of the present invention. The user equipment shown in FIG.1 includes an input portion 13 such as push buttons, or the like, a display portion 14 such as a liquid crystal display, or the like, a timer 15, a microphone 11, a speaker 12, a Floor control portion 16, a talking button 17, an SIP control portion 19, a communication control portion 18.

The timer 15 counts a time elapsed after the talk session is initiated. The microphone 11 is used for the inputting of voice. The speaker 12 is used for the outputting of voice. The Floor control portion 16 manages a floor request and a response to the request. The Floor control portion 16 has a transmitting unit 16a, a receiving unit 16b, and a notifying unit 16c. The transmitting unit 16a transmits the floor take request indicating the notice that the user requests the floor to the PoC server. The receiving unit 16b receives data indicating a talkable time that is allocated to user's own equipment. The notifying unit 16c notifies the user of a talkable time indicated by the received data.

The talking button 17 is a button that is pressed when the user would like to talk. The communication control portion 18 controls the packet communication with the network. The SIP control portion 19 controls an initiation of the talk session, and the like. The SIP control portion 19 has a first communicating unit 19a, a second communicating unit 19b, and a notifying unit 19c. The first communicating unit 19a conducts negotiation with the PoC server to establish the connection. The second communicating unit 19b negotiates a talkable time that is allocated to the user equipment with the PoC server. The notifying unit 19c notifies the user of the talkable time allocated by the negotiation. Here, the talking button 17 may be provided as a dedicated button or may be used commonly with a camera shooting button, for example, or may be used commonly with any button according to the setting.

FIG.2 shows an outline of sequences followed when a PoC server 22 notifies a user equipment 21 to which the floor is granted of the talkable time, in the PoC service of the present embodiment. First, functions that the PoC server 22 fulfills will be explained with reference to FIG.2 hereunder. The PoC server 22 has a receiving unit 22a, an granting unit 22b, an allocating unit 22c, a transmitting unit 22d, a first communicating unit 22e, and a second communicating unit 22f. The receiving unit 22a receives the floor take request from the user equipment. The granting unit 22b grants the floor take request. The allocating unit 22c allocates a talkable time to the user equipment to which the floor take request is granted. The transmitting unit 22d transmits the data indicating the allocated talkable time to the user equipment to which the floor take request is granted. The first communicating unit 22e conducts negotiation with the user equipment to establish the connection. The second communicating unit 22f negotiates the talkable time that is allocated to the user equipment 21 with the user equipment. In the first embodiment, functions of the first communicating unit 22e and the second communicating unit 22f are not used.

The user equipment 21 transmits the floor take request (Floor Request) to the PoC server 22 by pressing the talking button 17 when the user wishes to talk (step S201). The PoC server 22 receives the floor take request from the user equipment 21 and grants the floor take request. Then, the PoC server 22 allocates the talkable time to the user equipment 21 to which the floor take request is granted. Then, the PoC server 22 adds the data indicating the talkable time to a floor grant notification (Floor granted) indicating the notice that the floor take request is granted, and transmits the notification to the user equipment 21 (step S202).

The user equipment 21 receives the floor grant notification and initiates "Talk session" (RTP: Talk burst (transmission of voice data)) (step S203). Also, the user equipment 21 informs the user of the talkable time by displaying the talkable time on the display portion 14.

In this case, followings may be listed as a mode of notifying the user of the talkable time. (1) The display portion 14 displays a remaining talkable time in countdown figures. (2) The speaker 12 outputs a remaining talkable time such as "there are 10 seconds to go", "there are 5 seconds to go", "time is up", or the like by voice. (3) The sound or the vibration informs a remaining talkable time periodically at several seconds interval in response to the remaining talkable time. (4) The light emitting device such as the light emitting diode (LED), or the like is turned ON or is turned ON and OFF in response to the remaining talkable time. Also, any combination of the above notifying modes may be used. In addition, any notifying mode may be used if the user can know the remaining talkable time by such mode.

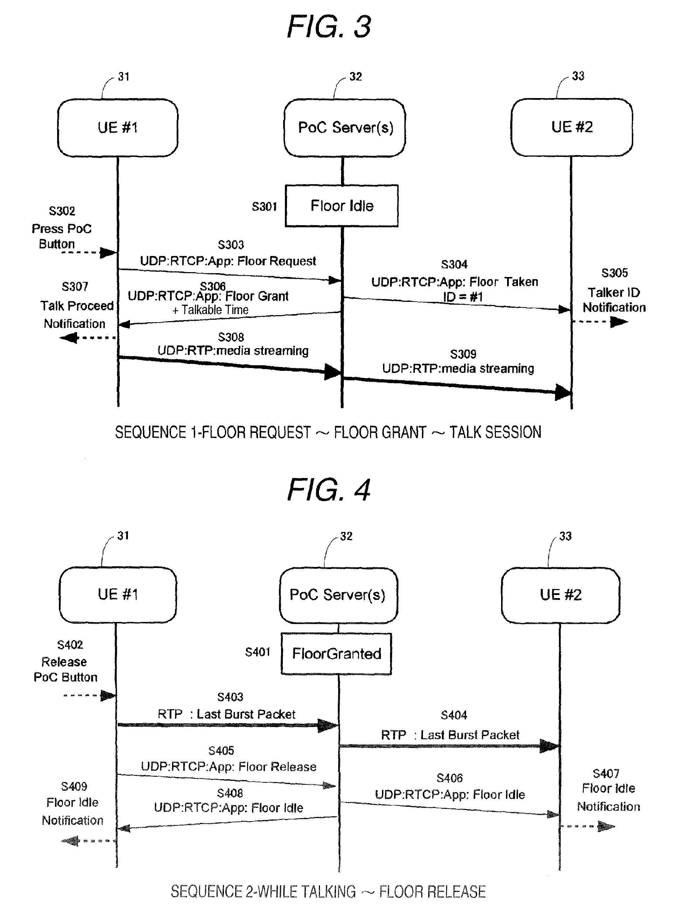

FIG.3 shows sequences that a user equipment 31 (UE #1) requests the floor, the floor is granted to the user equipment by a PoC server 32 and the user equipment initiates the talk session, in the PoC service of the present embodiment. In FIG.3, UE (User Equipment) denotes the user equipment, Floor Request denotes the floor take request, Floor Grant denotes the floor grant notification, Floor Taken denotes the notification indicating the notice that the floor is granted to another equipment, and RTP denotes voice data.

First, when no user equipment has the floor (Floor Idle) (step S301), a user equipment 31 (UE #1) presses the taking button 17 (Press PoC Button: step S302) and requests the floor to a PoC server 32 (Floor Request: step S303). When the PoC server 32 allocates the floor to the user equipment 31, such server adds data indicating the talkable time to the floor grant notification indicating that notice and transmits this notification to the user equipment 31 (Floor Grant: step S306). At this time, the PoC server 32 also notifies other user equipment 33 (UE #2) that the floor has been taken to the user equipment (Floor Taken ID=#1: step S304). Then, the user equipment 31 starts a talk session with the user equipment 33 via the PoC server 32 (media streaming: steps S308, S309)

FIG.4 shows sequences applied when the user equipment 31 releases the floor while talking, in the PoC service of the present embodiment. In FIG.4, Floor Release denotes the floor release, Floor Idle denotes the floor idle state, and Last Burst packet denotes the last packet of voice talk session. When the user equipment 31 has the floor (Floor Granted: step S401), such user equipment 31 releases the talking button 17 after the last talk to release the floor (Release PoC Button: step S402). Then, the last packet of the voice talk session is transmitted from the user equipment 31 to the PoC server 32 (Last Burst Packet: step S403), and then this last packet is transmitted from the PoC server 32 to the user equipment 33 (Last Burst Packet: step S404). The PoC server 32 notifies the user equipment 31 and the user equipment 33 that the floor is released (Floor Idle) (step S406, step S408)

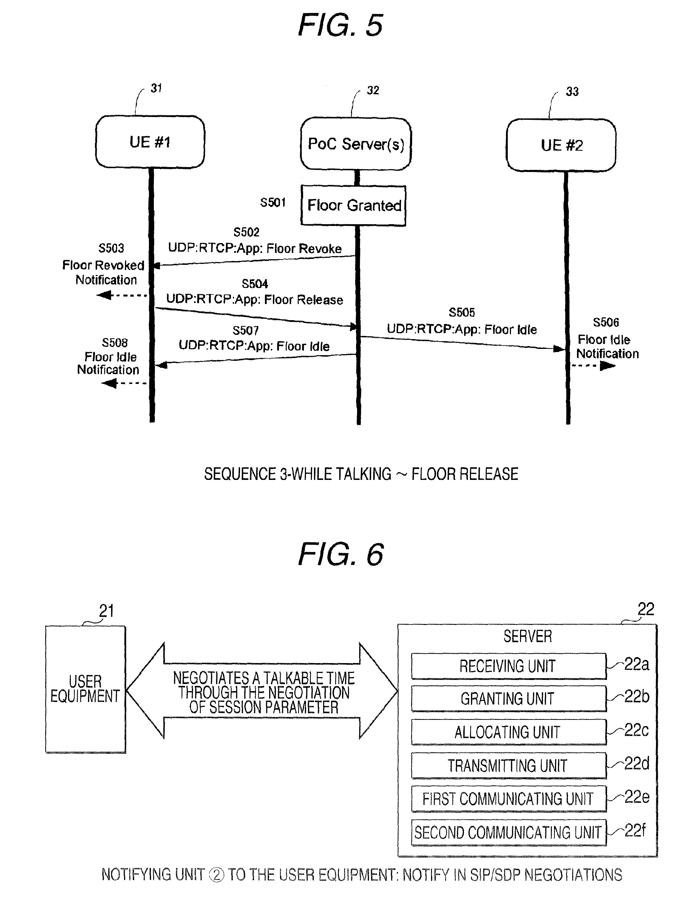

FIG.5 shows sequences applied when the user equipment 31 is notified by the PoC server 32 of the revocation of the floor while talking and releases the floor, in the PoC service of the present embodiment. In FIG.5, Floor Revoke denotes a floor revoke notification. Actually, the user can talk for about 2 to 3 seconds after such user received the floor revoke notification (In this case, it depends on the PoC server 32 or the operator of the PoC server 32 how many seconds the user can talk after the floor revoke notification received at the user equipment).

When the user equipment 31 has the floor (Floor Granted: step S501), the PoC server 32 notifies the user equipment 31 to revoke the floor from the user equipment 31 (Floor Revoke)(step S502). Then, the user equipment 31 releases the pressing of the talking button 17 to release the floor (Floor Release: step S504). Then, the PoC server 32 notifies the user equipment 31 and the user equipment 33 that the floor has been released (Floor Idle)(step S505, step S507).

In this manner, according to the present embodiment, since the PoC server 32 transmits the data indicating the talkable time to the user equipment 31, the equipment side can grasp in advance the talkable time in starting the talk session. Therefore, user's convenience in the PoC service can be improved.

### (Second Embodiment)

The internal configurations of the user equipment and the PoC server in a second embodiment are similar to those explained in the first embodiment. However, in the present embodiment, the receiving unit 22a, the granting unit 22b, the allocating unit 22c, and the transmitting unit 22d provided to the PoC server 22 are not used, but functions of the first communicating unit 22e and the second communicating unit 22f are used.

FIG.6 shows an outline of sequences applied when the PoC server notifies the user equipment of the talkable time in SIP/SDP negotiations before the talk session is initiated, in the PoC service of the second embodiment of the present invention. First, the PoC server 22 conducts negotiations with the user equipment 21 based on SIP/SDP (Session Initiation Protocol/Session Description Protocol) to establish the connection. At this time, the PoC server 22 negotiates the talkable time allocated to the user equipment 21 with the user equipment 21. In this case, the PoC server 22 determines whether or not the PoC server grants the request issued from the user equipment 21.

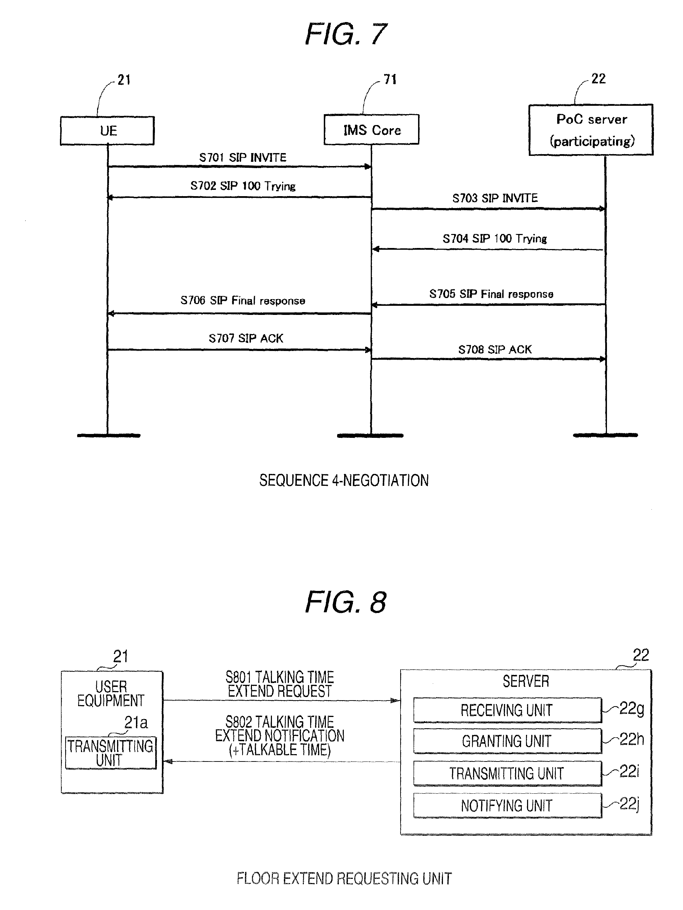

FIG.7 shows sequences applied when the user equipment 21 negotiates with the PoC server 22 via an IMS core 71, in the PoC service of the present embodiment. First, prior to the start of the talk session, the user equipment 21 transmits an SIP INVITE signal to the IMS Core 71 to establish SIP Session (step S701). This SIP INVITE signal is relayed by the IMS Core 71, and transmitted to the PoC server 22 (step S703). At this time, a request parameter used to negotiate the talkable time with the PoC service is set in the user equipment by using SDP (Session Description Protocol) in a Message Body of the SIP INVITE signal.

Then, the PoC server 22 sends back a response (SIP Final response) to the parameter proposed by the user equipment 21 and data concerning a user's allotted time in the talk session to the user equipment 21 via the IMS core 71 (steps S705, S706). A rate of an AMR codec used in the talk session, Port number to receive the voice, etc. are contained in SDP. Here, the SIP Final response is a response signal from the PoC server 22, and acts as an SIP 200 OK signal or an SIP 202 Accepted signal if the establishment of Session is OK.

In this manner, according to the present embodiment, since the PoC server negotiates the talkable time with the user equipment in SIP/SDP negotiations conducted prior to the start of the talk session, the equipment side can grasp in advance the talkable time before the start of the talk session. Therefore, user's convenience in the PoC service can be improved.

### (Third Embodiment)

The internal configurations of the user equipment and the PoC server in a third embodiment are similar to those explained in the first embodiment. However, functions of the user equipment and the PoC server in the present embodiment are different from those explained in the first embodiment.

FIG.8 shows an outline of sequences applied when the user equipment transmits a talking time extend request to the PoC service while talking to extend a talking time, in the PoC service of the third embodiment of the present invention. First, functions that the user equipment 21 and the PoC server 22 fulfill will be explained with reference to FIG.8 hereunder. The user equipment 21 has a transmitting unit 21 a which transmits Talking Time Extend Request to the PoC server 22 while the floor is granted to this user equipment.

The PoC server 22 has a receiving unit 22g, an granting unit 22h, a transmitting unit 22i, and a notifying unit 22j. The receiving unit 22g receives the Talking Time Extend Request from the user equipment to which the floor is granted. The granting unit 22h grants the Talking Time Extend Request when it determines that no floor take request is made from user equipments except the user equipment to which the floor is granted. The transmitting unit 22i transmits Talking Time Extend Notification to the user equipment to which the talking time extend request is granted. The notifying unit 22j notifies the user equipment that the Talking Time Extend Request is granted.

The user equipment 21 to which the floor is granted transmits the Talking Time Extend Request to the PoC server 22, and the PoC server 22 receives the Talking Time Extend Request (step S801). The PoC server 22 grants the Talking Time Extend Request when it determines that the floor take request is not made from user equipments except the user equipment 21. The PoC server 22 transmits the Talking Time Extend Notification indicating the notice that the talking time is extended to the user equipment 21 to which the Talking Time Extend Request is granted (step S802). At this time, the PoC server 22 notifies the user equipment 21 of the Talking Time Extend Notification as well as the extended talkable time.

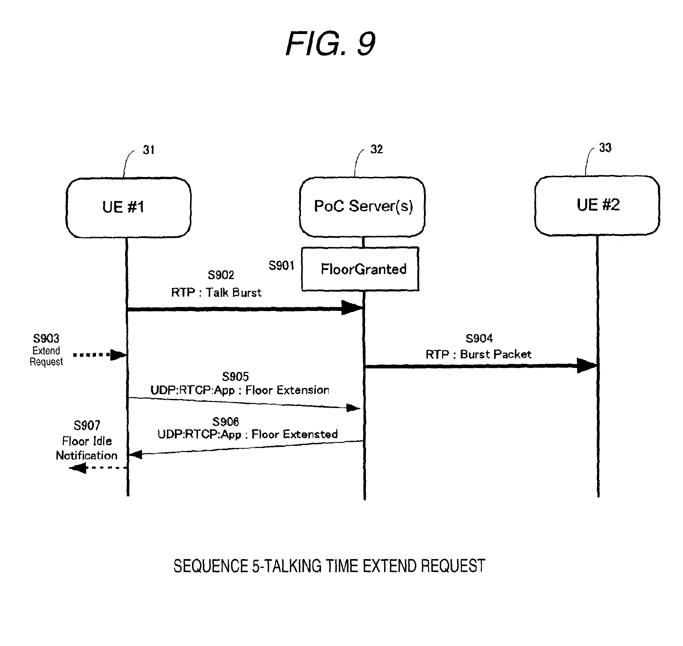

FIG.9 shows sequences applied when the user equipment 31 having the floor transmits the talking time extend request to the PoC server 32, in the PoC service of the present embodiment. First, in order to extend the talkable time (step S903) during the talk session (Floor Granted: step S901, Talk Burst: step S902, Burst Packet: step S904), the user equipment 31 transmits the talking time extend request (Floor Extension) to the PoC server 32 (step S905). The PoC server 32 transmits the Talking Time Extend Notification (Floor Extended) to the user equipment 31 (step S906) when the Poc server 32 grants the extend request issued from the user equipment 31, while the PoC server 32 transmits the Talking Time Extend Reject Notification (Floor Not Extended) to the user equipment 31 when the Poc server 32 rejects the user's extend request.

In this case, in order to determine whether or not the PoC server 32 should grant the talking time extend request issued from the user equipment 31, it may also be applied as the criterion whether or not the floor take request is made from other equipments. In addition, criteria such as (1) only a particular user (deteremined by the initiator of the talk session, the owner of the group, a level of priority, or the like) is granted, (2) the number of times of the user's extend request is checked and then the extend request is rejected when the number of times exceeds a predetermined number, and the like may be considered by way of example.

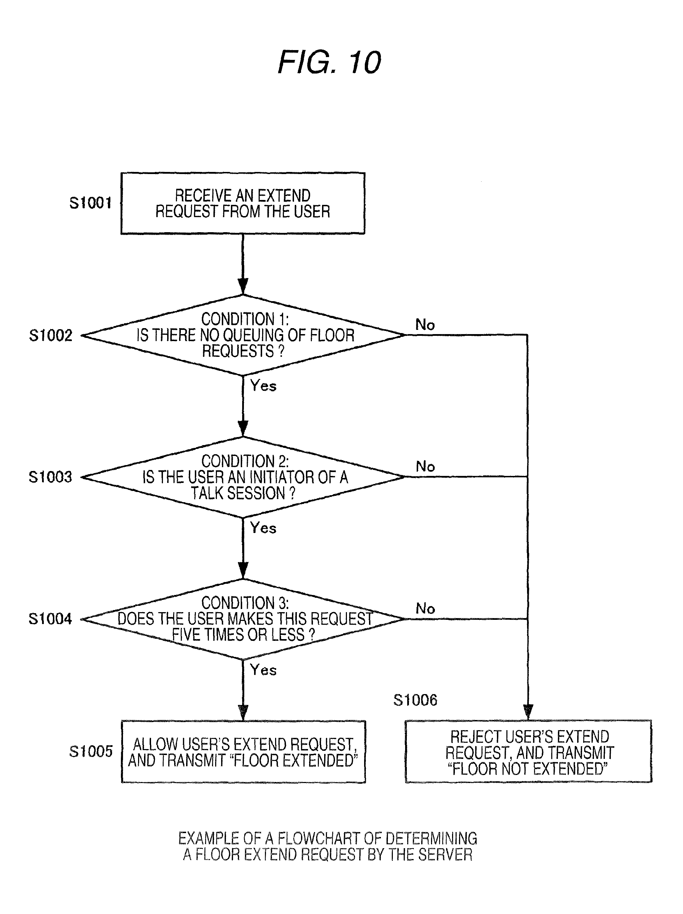

FIG.10 shows a flowchart applied when the PoC server 32 that receives the extend request determines whether or not the extension request should be granted. First, the PoC server 32 receives the extend request from the user equipment 31 (step S1001). Then, the PoC server 32 determines whether or not the floor take request made by other equipments is present (whether or not there is no queuing of floor take requests made by other equipments) (step S1002). In step S1002, if there is the queuing of floor take requests made by other equipments (No), the PoC server 32 rejects the extend request issued from the user equipment 31, and transmits "Floor Not Extended" to the user equipment 31 (step S1006).

In contrast, in step S1002, if there is no queuing of floor take requests made by other equipments (Yes), the PoC server 32 determines whether or not the user equipment 31 is the initiator of the talk session (step S1003). Then, if the user is not the initiator of the talk session (No), the PoC server 32 rejects the extend request issued from the user equipment 31, and transmits "Floor Not Extended" to the user equipment 31 (step S1006).

In contrast, in step S1003, if the user is the initiator of the talk session (Yes), the PoC server 32 determines whether or not the user made this extend request five times or less, for example (step S1004). Then, if the user made this extend request in excess of five times (No), the PoC server 32 rejects the extend request issued from the user equipment 31, and transmits "Floor Not Extended" to the user equipment 31 (step S1006).

In contrast, in step S1004, if the user made this extend request five times or less (Yes), the PoC server 32 grants the user's extend request, and transmits "Floor Extended" to the user (step S1005). In this manner, the PoC server 32 transmits "Floor Extended" to the user if it grants the user's extend request, while the PoC server 32 transmits "Floor Not Extended" to the user if it rejects the user's extend request.

As the method of applying the extended time, such examples may be considered that (1) the talkable time (3 minutes) is set by adding a granted extended time (e.g., 2 minutes) to the talkable time (e.g., 1 minute) set before the extend request, (2) a granted extended time (e.g., 2 minutes) is set as the new talkable time (2 minutes) as it is instead of the talkable time (e.g., 1 minute) set before the extend request, (3) an absolute time (e.g., up to 3:15) is pointed by using a standard time, e.g., GMT (Greenwich Mean Time), and the like.

In this manner, according to the present embodiment, the talkable time allocated by the PoC server can be extended at the user's will of the equipment by requesting an extension of the talking time from the communication equipment to the PoC server. Therefore, user's convenience in the PoC service can be improved.

In the above explanation, under the condition that the user is the initiator of the talk session, it is decided whether or not the talking time extend request should be granted. The particular user such as the owner of the group, the user with high priority, and the like may be applied as the condition except the initiator of the talk session.

The present invention is explained in detail with reference to the particular embodiments. But it is obvious for those skilled in the art that various variations and modifications can be applied without departing from a spirit and a scope of the present invention.
This application is based upon Japanese Patent Application (Patent Application No.2004-320586) filed on November 4, 2004; the entire contents of which are incorporated herein by reference.

### Industrial Applicability

According to the present invention, the user's talking time allocated by the server can be extended at the user's will of the equipment by requesting an extension of the talking time from the equipment in the PoC service. Therefore, the present invention possesses such an advantage that user's convenience in the PoC service can be improved, and is useful to the communication program and the communication equipment used in the PoC (Push-to-Talk over Cellular) service, and the like.

## Claims

1. A communication program of controlling a relay of communication among a plurality of equipments in a PoC service which implements a half duplex talk session using a packet communication among the plurality of equipments, and causing a computer to function as
a receiving unit that receives a talking time extend request from the equipment to which a floor is granted;
a granting unit that grants the talking time extend request by determining that no floor take request is made by equipments except the equipment to which the floor is granted; and
a transmitting unit that transmits a talking time extend notification to the equipment to which the talking time extend request is granted.

2. The communication program according to claim 1, further causing a computer to function as
a notifying unit that notifies a notice that the talking time extend request is granted to the equipment.

3. The communication equipment for conducting a half duplex talk session using a packet communication with another equipment via a server into which the communication program set forth in claim 1 or 2 is installed, comprising:
a transmitting unit that transmits the talking time extend request to the server while the floor is granted to the communication equipment.
